# DEMANDE DE BREVET EUROPEEN

(11) **EP 2 267 957 A1**
(43) Date de publication de la demande: **29.12.2010**
(21) Numéro de dépôt: 10163432.7
(22) Date de dépôt: 20.05.2010
(51) Int. Cl.: H04L 12/58

(54) **Établissement de communication de second mode entre deux utilisateurs**

(30) Priorité: 28.05.2009 FR 0953532
(71) Demandeur: France Telecom, 75015 Paris (FR)
(72) Inventeur: Goncalves, Susana, 92140, CLAMART (FR); Jozan, Grégoire, 75018, PARIS (FR); Le Roux, Ronan, 75005, PARIS (FR)

(57) **Abrégé**

L'invention se rapporte à un procédé d'établissement d'une communication entre un premier (U1) et un deuxième (U2) utilisateurs possédant respectivement un premier et un deuxième identifiants d'application partagés entre les utilisateurs, le premier utilisateur étant connecté à une application de communication et étant apte à communiquer selon un premier mode de communication avec le deuxième utilisateur (U2), adapté à recevoir une requête de mise en relation, à obtenir un identifiant d'un second mode de communication du premier utilisateur et un identifiant du second mode du deuxième utilisateur et à établir une communication entre les deux utilisateurs selon le deuxième mode de communication en fonction des identifiants obtenus.

L'invention se rapporte également à un procédé de demande d'établissement d'une communication de second mode entre le premier (U1) et le deuxième (U2) utilisateurs, le premier utilisateur étant connecté à une application de communication et étant apte à communiquer selon un premier mode de communication avec le deuxième utilisateur, adapté à transmettre une requête de mise en relation.

L'invention concerne également un terminal et un serveur mettant en oeuvre les procédés de demande d'établissement de communication et d'établissement de communication respectivement.

## Description

La présente invention concerne de manière générale le domaine des télécommunications.

Elle se rapporte plus particulièrement à un procédé de mise en relation interpersonnelle permettant d'établir une deuxième communication entre deux utilisateurs en relation via une première communication, sur requête de l'un d'eux tout en préservant l'anonymat de ces utilisateurs.

Des systèmes connus permettent à des utilisateurs proches ou inconnus de communiquer à travers différentes applications avec une identité respectant l'anonymat des utilisateurs. Ces systèmes sont, par exemple, des réseaux sociaux (Facebook (marque déposée), MeeticAffinity (marque déposée)...) ou des messageries instantanées.

Les systèmes de messagerie instantanée permettent notamment l'échange instantané de messages textuels entre plusieurs ordinateurs connectés au même réseau informatique, par exemple Internet. Ces systèmes de messagerie instantanée requièrent l'emploi d'un logiciel client qui se connecte à un serveur distant de messagerie instantanée.

L'utilisation nécessite une phase préalable d'enregistrement lors de laquelle l'utilisateur communique au serveur un identifiant qui est propre au service. Cet identifiant est par exemple un pseudonyme choisi par l'utilisateur.

L'utilisateur peut ensuite communiquer avec les autres utilisateurs avec cet identifiant qui est une identité visible des autres utilisateurs.

Cet identifiant permet à un utilisateur de communiquer avec les autres sans révéler aux autres son identité et ainsi de garder l'anonymat.

Si des utilisateurs souhaitent échanger à travers un autre moyen de communication, par exemple poursuivre les échanges par une conversation téléphonique ou par un échange de mails, ils doivent se communiquer des informations sur leurs coordonnées personnelles, par exemple un numéro de téléphone personnel ou une adresse mail.

Ces coordonnées propres à l'utilisateur permettent de retrouver l'identité de l'utilisateur et, de ce fait, ne préservent pas l'anonymat de l'utilisateur.

Certains systèmes proposent des alias téléphoniques, c'est-à-dire des numéros de téléphone attribués spécifiquement pour une durée prédéterminée et associés au numéro de téléphone personnel de utilisateur. Dans ces systèmes, seuls les alias sont communiqués. Lorsqu'un utilisateur appelle un autre utilisateur, il utilise l'alias et l'appel est renvoyé sur le poste de l'autre utilisateur sans communication de son numéro personnel.

Ces systèmes nécessitent l'utilisation d'un nombre important de comptes téléphoniques supplémentaires qui engendre une gestion lourde et un coût supplémentaire.

Il existe donc un besoin pour une solution plus satisfaisante.

A cet effet, la présente invention propose un procédé d'établissement d'une communication entre un premier et un deuxième utilisateurs possédant respectivement un premier et un deuxième identifiants d'application, lesdits premiers et deuxième identifiants d'application étant partagés entre les utilisateurs, le premier utilisateur étant connecté à une application de communication dédiée au moyen d'un premier module de communication et du premier identifiant d'application et étant apte à communiquer selon un premier mode de communication avec le deuxième utilisateur au moyen du deuxième identifiant d'application, **caractérisé en ce qu**'il comporte :
- une étape de réception en provenance du premier module de communication d'une requête de mise en relation, ladite requête comportant le premier et le deuxième identifiant d'application;
- une étape d'obtention d'au moins un identifiant d'un second mode de communication du premier utilisateur et d'au moins un identifiant du second mode de communication du deuxième utilisateur, en fonction du premier et du deuxième identifiants d'application;
- une étape d'enregistrement dans une mémoire, de l'association entre les deux identifiants du second mode de communication; et une étape d'établissement d'une communication entre le premier et le deuxième utilisateurs selon le deuxième mode de communication en fonction des identifiants associés enregistrés.

Ainsi, sur requête d'un utilisateur, un serveur établit, de façon anonyme, une nouvelle communication entre les utilisateurs. Avantageusement, cette communication utilise les coordonnées personnelles des utilisateurs, par exemple leurs numéros de téléphone personnels ou leur adresse de messagerie, et ne nécessite pas l'établissement de nouvelles coordonnées. Ces utilisateurs peuvent ainsi par exemple avoir une conversation téléphonique à partir de leur terminal personnel sans que les numéros d'appel soient communiqués entre eux. L'anonymat des utilisateurs est ainsi respecté.

Selon un mode de réalisation particulier, le procédé d'établissement comporte en outre une étape de communication initiée par un deuxième module de communication du premier utilisateur via un identifiant de communication prédéterminé et en ce que l'étape d'établissement d'une communication comporte une étape d'appel d'un deuxième module de communication du deuxième utilisateur.

Dans ce mode de réalisation, l'utilisateur initie la communication de second mode en appelant un serveur de mise en relation. Le serveur appelé retrouve le numéro d'appel du deuxième utilisateur et établit la communication entre les deux utilisateurs. Ce mode de réalisation permet une facturation aisée de la communication, à l'initiative du premier utilisateur.

Selon une caractéristique particulière de ce mode de réalisation, l'identifiant de communication est transmis en réponse à la requête de mise en relation.

La transmission d'un identifiant de communication, par exemple un numéro d'appel d'un serveur de communication, est une facilité d'utilisation pour l'utilisateur. De plus, elle permet de répartir les tâches d'établissement de communication sur des serveurs de communication différents.

Selon un autre mode de réalisation particulier du procédé d'établissement, l'étape d'établissement d'une communication comporte une première étape d'appel d'un deuxième module de communication du premier utilisateur et une deuxième étape d'appel d'un deuxième module de communication du deuxième utilisateur.

Ce mode de réalisation présente l'avantage de simplifier les actions du premier utilisateur. L'établissement de la communication ne nécessite pas la composition d'un numéro d'appel par l'utilisateur.

Selon un mode de réalisation particulier du procédé d'établissement, les deuxièmes modules de communication sont des modules de messagerie électronique.

L'utilisation de la messagerie permet par exemple de transmettre des documents volumineux. Ceci est particulièrement avantageux si le terminal d'un des utilisateurs utilisé pour l'application de communication n'est pas adapté pour émettre ou recevoir de tels documents.

Selon un mode de réalisation particulier du procédé d'établissement, les deuxièmes modules de communication sont des terminaux de téléphonie. Ces terminaux de téléphonie sont des terminaux fixes ou des terminaux mobiles.

Selon un mode de réalisation particulier du procédé d'établissement, la requête de mise en relation est une requête de type HTTP.

Selon une caractéristique particulière, le procédé d'établissement comporte en outre, après l'étape d'établissement de la communication, une étape d'effacement de la mémoire, des identifiants associés enregistrés.

L'effacement des identifiants associés apporte une sécurité supplémentaire car, ainsi, les identifiants sont disponibles pour une seule communication ou pour une durée restreinte prédéterminée.

De plus, la mémoire permettant l'enregistrement des identifiants associés peut être de taille restreinte.

L'invention se rapporte également à un procédé de demande d'établissement d'une communication d'un premier utilisateur avec un deuxième utilisateur, possédant respectivement un premier et un deuxième identifiants d'application, lesdits premiers et deuxième identifiants d'application étant partagés entre les utilisateurs, le premier utilisateur étant connecté à une application de communication dédiée au moyen d'un premier module de communication et du premier identifiant d'application et étant apte à communiquer selon un premier mode de communication avec le deuxième utilisateur au moyen du deuxième identifiant d'application, **caractérisé en ce qu**'il comporte une étape d'envoi, par le premier module de communication, d'une requête de mise en relation par l'intermédiaire d'un second mode de communication, ladite requête comportant le premier et le deuxième identifiant d'application.

Selon un mode de réalisation particulier, le procédé de demande d'établissement comporte en outre, suite à la réception d'une réponse à la requête de mise en relation, une étape d'envoi, par le premier module de communication à un deuxième module de communication, d'un identifiant de communication prédéterminé.

L'invention concerne également un serveur de communication entre un premier et un deuxième utilisateurs possédant respectivement un premier et un deuxième identifiants d'application, **caractérisé en ce qu**'il comporte :
- des moyens de réception en provenance d'un premier module de communication du premier utilisateur, d'une requête de mise en relation, ladite requête comportant un premier identifiant d'application du premier utilisateur et un deuxième identifiant d'application du second utilisateur;
- des moyens d'obtention d'au moins un identifiant d'un second mode de communication du premier utilisateur et d'au moins un identifiant du second mode de communication du deuxième utilisateur, en fonction du premier et du deuxième identifiants d'application;
- des moyens d'enregistrement dans une mémoire, de l'association entre les deux identifiants du second mode de communication;
- des moyens d'établissement d'une communication entre le premier et le deuxième utilisateurs selon le deuxième mode de communication en fonction des identifiants associés enregistrés.

L'invention concerne également un terminal de communication comportant un premier module de communication apte à se connecter à une application de communication dédiée au moyen d'un premier identifiant d'application et étant apte à communiquer selon un premier mode de communication avec un deuxième utilisateur au moyen du deuxième identifiant d'application, **caractérisé en ce qu**'il comporte des moyens d'envoi d'une requête de mise en relation par l'intermédiaire d'un second mode de communication, ladite requête comportant le premier et le deuxième identifiant d'application.

L'invention se rapporte encore à un produit programme d'ordinateur comprenant des instructions pour mettre en oeuvre les étapes d'un procédé d'établissement d'une communication entre un premier et un deuxième utilisateurs tel que décrit précédemment lorsqu'il est chargé et exécuté par un processeur.

L'invention se rapporte enfin à un produit programme d'ordinateur comprenant des instructions pour mettre en oeuvre les étapes d'un procédé de demande d'établissement d'une communication entre un premier et un deuxième utilisateurs tel que décrit précédemment lorsqu'il est chargé et exécuté par un processeur.

D'autres particularités et avantages de la présente invention apparaitront dans la description suivante de trois modes de réalisation donnés à titre d'exemple non limitatif, en référence aux dessins annexés, dans lesquels :
- la figure 1 est un schéma illustrant le contexte général de l'invention selon un premier mode de réalisation,
- la figure 2 est un schéma bloc représentant un terminal de communication apte à réaliser les étapes d'un procédé de demande d'établissement d'une communication selon un mode de réalisation de l'invention,
- la figure 3 est un organigramme illustrant les différentes étapes d'un procédé de demande d'établissement d'une communication et d'un procédé d'établissement d'une communication selon le premier mode de réalisation de l'invention,
- la figure 4 est un schéma illustrant le contexte général de l'invention selon un deuxième mode de réalisation,
- la figure 5 est un organigramme illustrant les différentes étapes d'un procédé de demande d'établissement d'une communication et d'un procédé d'établissement d'une communication selon le deuxième mode de réalisation de l'invention,
- la figure 6 est un schéma illustrant le contexte général de l'invention selon un troisième mode de réalisation,
- la figure 7 est un organigramme illustrant les différentes étapes d'un procédé de demande d'établissement d'une communication et d'un procédé d'établissement d'une communication selon le troisième mode de réalisation de l'invention,
- la figure 8 est un schéma bloc représentant un serveur apte à réaliser les étapes d'un procédé d'établissement d'une communication selon un mode de réalisation de l'invention.

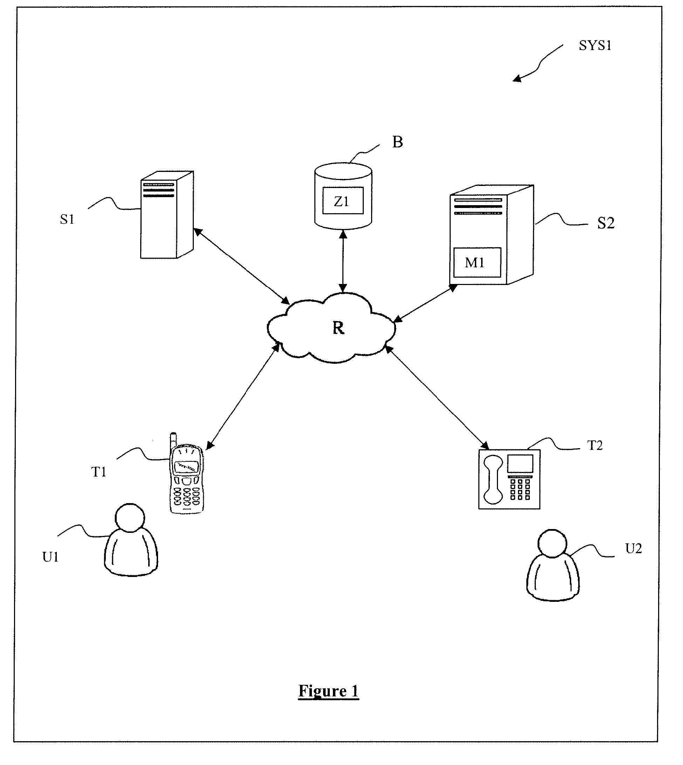

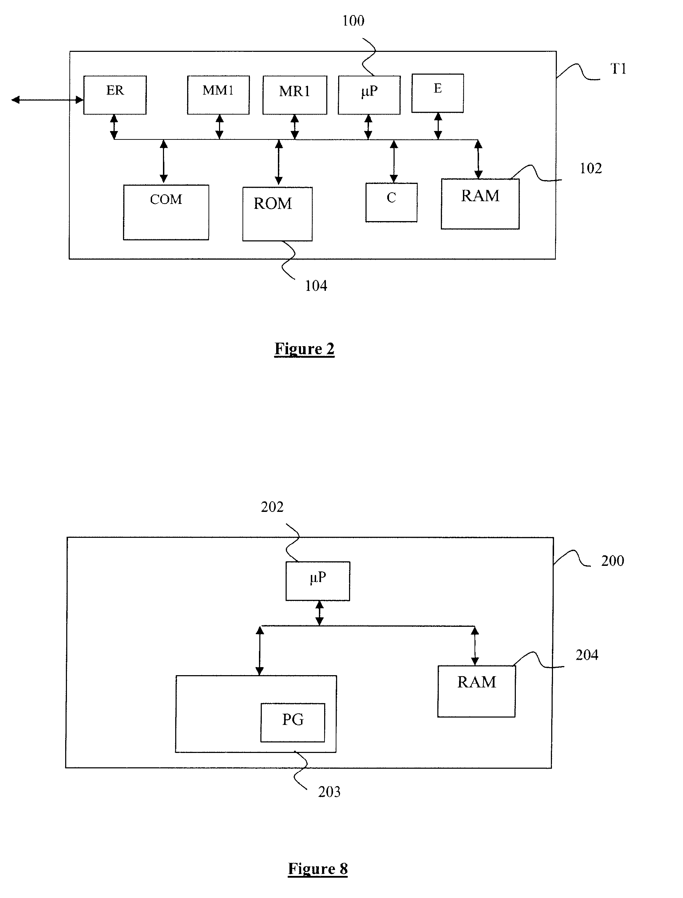

Un premier mode de réalisation d'un procédé d'établissement d'une communication et d'un procédé de demande d'établissement d'une communication va maintenant être décrit en référence aux figures 1 et 2.

Dans ce mode de réalisation, la communication établie est une conversation téléphonique.

En référence à la figure 1, un système SYS1 comprend un serveur S1 de messagerie instantanée et un serveur de communication S2.

Le système SYS1 comprend également une mémoire B, par exemple une base de données accessible par le serveur de communication S2, à travers un réseau R de communication.

A titre d'alternative, la mémoire B est une zone mémoire du serveur S2 ou encore une zone mémoire accessible directement par le serveur S2.

Le système SYS1 comporte également un premier terminal T1 d'un premier utilisateur U1.

Le premier terminal T1 est, par exemple, un PDA (pour "Personal Digital Assistant") ou un téléphone mobile.

Le premier terminal T1 du système SYS1 1 possède notamment, comme illustré sur la figure 2, une unité de traitement 100 équipée d'un microprocesseur, une mémoire vive de type RAM 102, une ou plusieurs mémoires mortes de type ROM ou EEPROM 104 dans laquelle sont enregistrés des programmes pouvant être exécutés par le microprocesseur, un écran E et un clavier C.

Le premier terminal T11 peut comporter de manière classique et non exhaustive les éléments suivants: un microphone, un haut-parleur, un moyen de stockage...

Le premier terminal T1 comporte un module client de messagerie instantanée MM1, pour l'accès au service de messagerie instantanée installé sur le serveur de messagerie instantanée S1, un module de demande de mise en relation MR1 associé et un module d'émission/réception de données ER.

Le module client de messagerie instantanée MM1 représente un premier module de communication.

Le module d'émission/réception de données ER est apte à émettre et à recevoir des données via le réseau R.

Le premier terminal T1 comporte également un module de communication COM apte à établir une communication téléphonique et à communiquer avec un autre terminal à travers le réseau de communication R.

A titre d'alternative, la communication est une communication par SMS (pour "Short message Service") ou encore l'envoi ou la réception d'un message électronique de type mail.

Le module de communication COM représente un deuxième module de communication.

Le système SYS 1 comporte également un deuxième terminal T2 d'un deuxième utilisateur U2.

Le deuxième terminal T2 du deuxième utilisateur U2 est, par exemple, un téléphone fixe, un téléphone mobile, un PDA.

De façon classique, les utilisateurs U1 et U2 sont enregistrés auprès du service de messagerie instantanée au moyen respectivement d'un premier identifiant d'application IA1 et d'un deuxième identifiant d'application IA2.

On suppose que le premier utilisateur U1 connaît le deuxième identifiant d'application IA2 du deuxième utilisateur U2. Ainsi le premier terminal T1 de l'utilisateur U1 est apte à communiquer avec un terminal du deuxième utilisateur U2, par exemple le deuxième terminal T2, à travers le service de messagerie instantanée, c'est-à-dire selon un premier mode de communication.

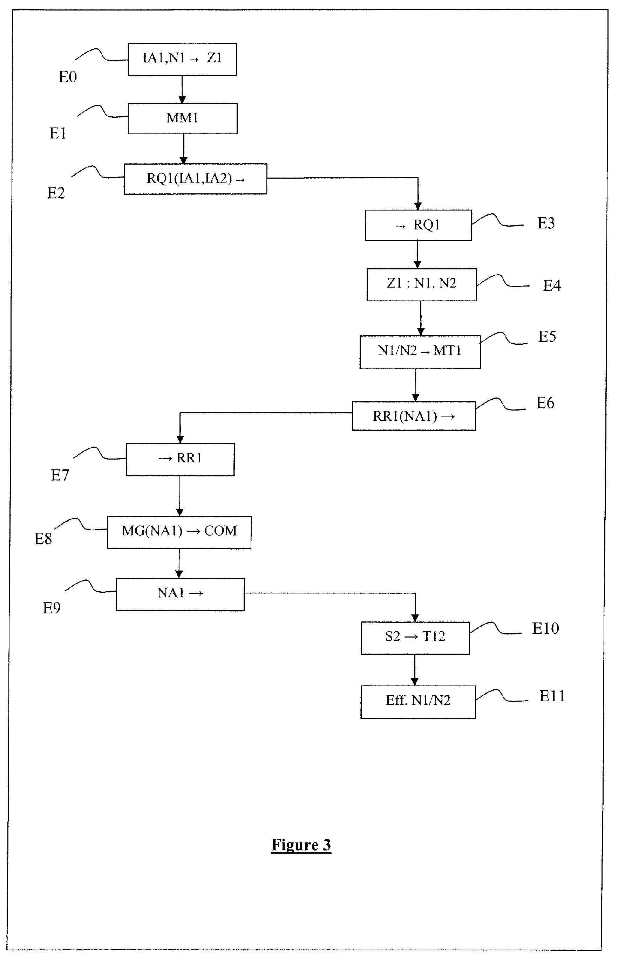

En référence à la figure 3, lors d'une étape préalable d'inscription E0, l'utilisateur U1 communique au serveur de communication S2 le premier identifiant d'application IA1 et un numéro de téléphone N1 du premier terminal T1 du premier utilisateur U1. Le serveur de communication S2 enregistre le numéro de téléphone N1 du premier terminal T1 en association avec le premier identifiant d'application IA1 du premier utilisateur U1 dans une table d'identifiants Z1. Le numéro de téléphone N1 du premier terminal T1 du premier utilisateur U1 est un identifiant d'un second mode de communication de l'utilisateur U1.

La table d'identifiants Z1 est par exemple stockée dans la mémoire B.

L'étape d'inscription E0 est par exemple effectuée par l'utilisateur U1 par accès à un service Web d'inscription installé sur le serveur de communication S2.

A titre d'alternative, l'étape d'inscription est effectuée auprès du serveur de messagerie instantanée S1, par exemple lors de l'inscription au service de messagerie instantanée.

Egalement à titre d'alternative, plusieurs identifiants de second mode de communication de l'utilisateur U1 peuvent être enregistrés en association avec le premier identifiant d'application IA1. Par exemple, le numéro de téléphone N1 et une adresse mail du premier utilisateur U1 sont enregistrés en association avec le premier identifiant d'application IA1.

Lors d'une deuxième étape préalable d'inscription (non représentée sur la figure), le deuxième utilisateur U2 communique au serveur de communication S2 le deuxième identifiant d'application IA2 et un numéro de téléphone N2 du deuxième terminal T2. Suite à la réception de ces informations, le serveur de communication S2 enregistre le numéro de téléphone N2 du deuxième terminal T2 en association avec le deuxième identifiant d'application IA2. Le numéro de téléphone N2 du deuxième terminal T2 du deuxième utilisateur U2 est un identifiant d'un second mode de communication de l'utilisateur U2.

Lors d'une étape E1, le premier utilisateur U1 se connecte au service de messagerie instantanée au moyen du module client de messagerie instantanée MM1. L'utilisateur U1 est ainsi apte à communiquer selon un premier mode communication avec d'autres utilisateurs du service de messagerie instantanée et, en particulier avec le deuxième utilisateur U2.

Lors d'une étape E2, suite à une demande du premier utilisateur U1, le module de mise en relation MDR associé au module de messagerie instantanée MM1 du premier terminal T1, transmet au serveur de communication S2, via le module d'émission/réception ER, une requête RQ1 de mise en relation avec l'utilisateur U2 comportant le premier identifiant d'application IA1 du premier utilisateur U1 et le deuxième identifiant d'application IA2 du deuxième utilisateur U2.

Plus précisément, la demande du premier utilisateur U1 consiste, par exemple, à composer un code prédéterminé, par exemple une combinaison de touches, sur le clavier C. Suite à la détection de ce code, le module de demande de mise en relation MR1 propose au premier utilisateur U1 de sélectionner un identifiant d'application d'un utilisateur. Par exemple, le deuxième identifiant d'application IA2 est sélectionné, par exemple dans une liste des contacts du premier utilisateur U1.

La requête RQ1 est par exemple une requête de type http (pour "Hyper Text Protocol").

A titre d'alternative, le deuxième identifiant d'application IA2 est saisi au moyen du clavier C du premier terminal T1.

Il est précisé que le deuxième utilisateur U2 est ou non en communication avec le premier utilisateur U1, à travers le service de messagerie instantanée, lors de la demande de mise en relation effectuée par le premier utilisateur U1.

A titre d'alternative, la requête RQ1 comporte également une information relative au type de mise en relation.

Dans le mode de réalisation décrit, le type de mise en relation est une conversation téléphonique. A titre d'alternative, le type de mise en relation est un envoi de SMS (pour "Short message Service") ou un envoi de message électronique de type mail.

L'étape E2 de transmission de requête est suivie d'une étape E3 lors de laquelle le serveur de communication S2 reçoit la requête de mise en relation RQ1.

Lors d'une étape suivante E4, le serveur de communication S2 recherche dans la table d'identifiants Z1, d'une part un premier identifiant de second mode de communication associé au premier utilisateur U1 et d'autre part, un deuxième identifiant de second mode de communication associé au deuxième utilisateur U2.

Dans le cas où il n'y a pas d'identifiant de second mode associé à l'un ou à l'autre utilisateur dans la table d'identifiants Z1, un des deux utilisateurs n'est pas inscrit au service de mise en relation et le serveur de communication S2 ne donne pas suite à la requête du premier terminal T1.

Dans le cas où la requête de mise en relation RQ1 comporte un type de mise en relation, l'étape E4 consiste à rechercher dans la table d'identifiants Z1, un premier et un deuxième identifiants de second mode de communication adaptés au type de mise en relation. Par exemple, l'identifiant recherché est un numéro de terminal mobile si le type de mise en relation est un envoi de SMS.

Dans le mode de réalisation particulier décrit, le premier identifiant de deuxième mode de communication obtenu lors de l'étape E4 est le numéro de téléphone N1 du premier utilisateur U1 et le deuxième identifiant de deuxième mode de communication obtenu lors de l'étape E4 est le numéro de téléphone N2 du deuxième utilisateur U2.

L'étape E4 est suivie d'une étape E5 lors de laquelle le serveur S2 enregistre, dans une mémoire temporaire M1 du serveur de communication S2, le deuxième identifiant N2 de second mode de communication en association avec le premier identifiant N1 de second mode de communication.

Lors de l'étape E6 suivante, le serveur de communication S2 transmet une réponse RR1 au module de mise en relation MR1 du premier terminal T1. La réponse RR1 comporte un numéro NA1 d'accès au serveur de communication S2, par exemple un numéro de téléphone. Le numéro d'accès NA1 représente un identifiant de communication.

L'étape E6 est suivie d'une étape E7 lors de laquelle le module de mise en relation MR1 du premier terminal T1 reçoit la réponse RR1 et transmet, lors d'une étape E8, un message MG au module de communication COM du premier terminal T1. Le message MG est par exemple un ordre de numérotation du numéro d'accès NA1.

Lors d'une étape E9 suivante, le module de communication COM compose le numéro d'accès NA1 du serveur de communication S2 contenu dans le message MG et établit ainsi une communication téléphonique, via le module d'émission/réception ER et le réseau R, avec le serveur de communication S2.

A titre d'alternative, le numéro d'accès NA1 est connu du module de demande de mise en relation MR1 et n'est pas transmis dans la réponse RR1. La réponse RR1 est alors par exemple, un accord du serveur de communication S2 suite à la demande de mise en relation.

L'étape E9 est suivie d'une étape E10 lors de laquelle le serveur de communication S2 appelle le terminal T2 du deuxième utilisateur U2 et met en relation le premier terminal T1 du premier utilisateur U1 avec le deuxième terminal T2 du deuxième utilisateur U2. La relation ainsi établie représente une communication de second mode de communication.

Lors d'une étape E11, le premier identifiant N1 de second mode de communication et le deuxième identifiant N2 de second mode de communication associé sont effacés de la mémoire temporaire M1 par le serveur de communication S2, par exemple au bout d'un délai prédéterminé.

A titre d'alternative, lors de l'étape E8, le message RR1, reçu lors de l'étape E7, est affiché sur l'écran E du terminal T1 et lors de l'étape E9 suivante, l'utilisateur U1 compose le numéro d'accès NA1 du serveur de communication S2 contenu dans le message MG sur le terminal T1 et établit ainsi une communication téléphonique avec le serveur de communication S2.

Encore, à titre d'alternative, l'identifiant de second mode de communication du premier utilisateur est par exemple le numéro de téléphone d'un autre terminal de cet utilisateur et lors de l'étape E9, le numéro d'accès NA1 du serveur de communication S2 est composé sur cet autre terminal et la communication est établie à partir de ce terminal.

La mémoire morte 104 du terminal T1 du premier utilisateur comporte des registres mémorisant un programme d'ordinateur comportant des instructions de programme adaptées à mettre en oeuvre le procédé de demande d'établissement d'une communication selon l'invention tel que décrit en référence aux figures 1 à 3.

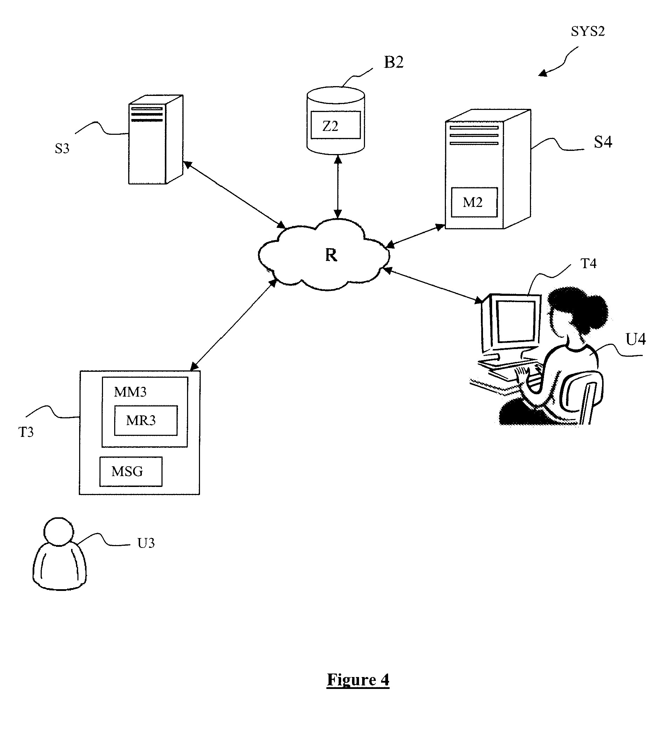

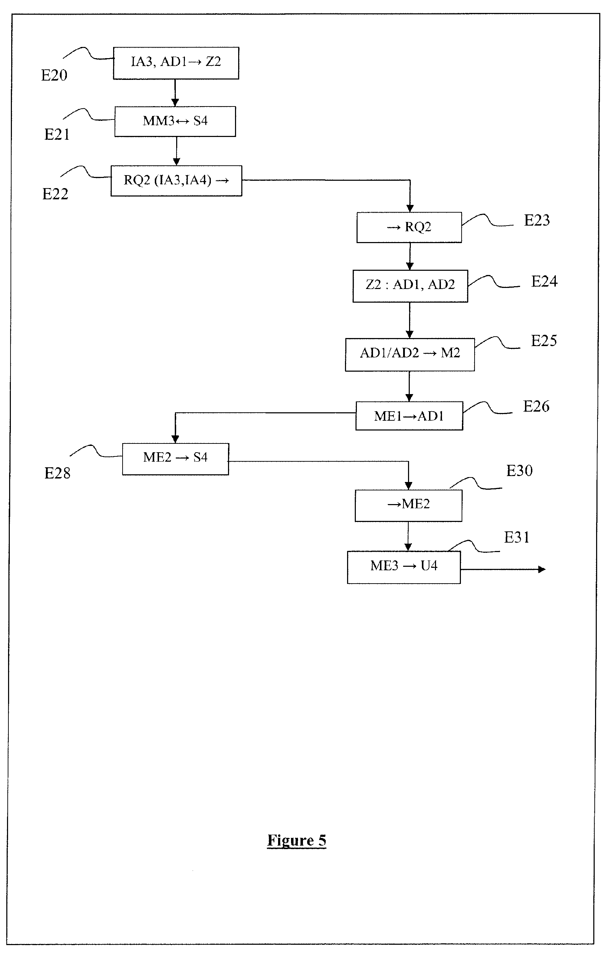

Un deuxième mode de réalisation d'un procédé d'établissement d'une communication et d'un procédé de demande d'établissement d'une communication va maintenant être décrit en référence aux figures 4 et 5.

Dans ce mode de réalisation, la communication établie est un envoi d'un message électronique de type mail.

En référence à la figure 4, un système SYS2 comprend un serveur S3 de messagerie instantanée et un serveur de communication S4.

Le système SYS2 comprend également une mémoire B2, accessible par le serveur de communication S4, à travers un réseau R de communication.

Le système SYS2 comporte également un terminal T3 d'un premier utilisateur U3. Le terminal T3 est par exemple un ordinateur de type PC.

A titre d'alternative, le terminal T3 est, par exemple, un téléphone mobile ou un PDA.

Un module client de messagerie instantanée MM3, installé sur le terminal T3, permet au premier utilisateur U3 d'accéder au service de messagerie instantanée installé sur le serveur S3. Le module client de messagerie instantanée MM3 représente un premier module de communication.

Le module client de messagerie instantanée MM3 comporte un module de demande de mise en relation MR3.

Le terminal T3 comporte également un module client de messagerie électronique MSG, permettant d'émettre et de recevoir des messages électroniques de type mail, au moyen d'une adresse électronique personnelle de l'utilisateur. Le module client de messagerie électronique MSG représente un deuxième module de communication.

Le système SYS2 comporte également un terminal T4 appartenant à un deuxième utilisateur U4. Le terminal T4 du deuxième utilisateur U4 est par exemple un ordinateur de type PC.

De façon classique, les utilisateurs U3 et U4 sont enregistrés auprès du service de messagerie instantanée au moyen respectivement d'un premier identifiant d'application IA3 et d'un deuxième identifiant d'application IA4.

Le premier utilisateur U3 connaît le deuxième identifiant d'application IA4 du deuxième utilisateur U4. Ainsi le terminal T3 du premier utilisateur U3 est apte à communiquer avec le deuxième utilisateur U4 à travers le service de messagerie instantanée, c'est-à-dire selon un premier mode de communication.

En référence à la figure 5, lors d'une étape préalable d'inscription E20, le premier utilisateur U3 communique au serveur de communication S4 le premier identifiant d'application IA3 et une première adresse AD1 de messagerie électronique de type mail. Le serveur de communication S4 enregistre l'adresse de messagerie AD1 en association avec le premier identifiant d'application IA3 dans une table d'identifiants Z2. L'adresse de messagerie AD1 est un identifiant d'un second mode de communication du premier utilisateur U3.

Lors d'une deuxième étape préalable d'inscription (non représentée sur la figure), le deuxième utilisateur U4 communique au serveur de communication S4 le deuxième identifiant d'application IA4 et une deuxième adresse de messagerie AD2 et le serveur de communication S4 enregistre la deuxième adresse de messagerie AD2 en association avec le deuxième identifiant d'application IA4. L'adresse de messagerie AD2 est un identifiant d'un second mode de communication du deuxième utilisateur U4.

Lors d'une étape E21, similaire à l'étape E1, le premier utilisateur U3 se connecte au service de messagerie instantanée au moyen du module client de messagerie instantanée MM3. L'utilisateur U3 est ainsi apte à communiquer selon un premier mode communication avec d'autres utilisateurs du service de messagerie instantanée et, en particulier avec le deuxième utilisateur U4.

Lors d'une étape E22, le module de mise en relation MR3 du module de messagerie instantanée MM3 du terminal T3 du premier utilisateur U3, transmet au serveur de communication S4, une requête RQ2 de mise en relation avec le deuxième utilisateur U4 comportant le premier identifiant d'application IA3 du premier utilisateur U3 et le deuxième identifiant d'application IA4 du deuxième utilisateur U4.

Plus précisément, la requête de mise en relation est initiée par le premier utilisateur U3 par activation d'une icône affichée sur un écran du terminal T3. Lors de l'activation de l'icône, par exemple effectuée par un double clic, le module de demande de mise en relation MR3 propose au premier utilisateur U3 de sélectionner un identifiant d'application d'un utilisateur, par exemple dans une liste des contacts du premier utilisateur U3.

L'étape E22 de transmission de requête est suivie d'une étape E23 lors de laquelle le serveur de communication S4 reçoit la requête de mise en relation RQ2.

Lors d'une étape suivante E24, le serveur de communication S4 accède à la table d'identifiants Z2 et obtient d'une part un identifiant de second mode de communication associé au premier utilisateur U3 et d'autre part un identifiant de second mode de communication associé au deuxième utilisateur U4.

Dans le mode de réalisation particulier décrit, l'identifiant de deuxième mode de communication associé au premier utilisateur U3 obtenu est l'adresse de messagerie AD1 du premier utilisateur U3 et l'identifiant de deuxième mode de communication associé au deuxième utilisateur U4 obtenu est l'adresse de messagerie AD2 du deuxième utilisateur U4.

L'étape E24 est suivie d'une étape E25 lors de laquelle le serveur de communication S4 enregistre, dans une mémoire temporaire M2 du serveur de communication S4, l'identifiant AD2 de second mode de communication du deuxième utilisateur U4 en association avec l'identifiant AD1 de second mode de communication du premier utilisateur U3.

Lors de l'étape E26 suivante, le serveur de communication S4 envoie au premier utilisateur U3, au moyen de la première adresse de messagerie électronique AD1, c'est-à-dire de l'identifiant AD1 de second mode de communication du premier utilisateur U3 enregistré dans la mémoire M2, un message électronique ME1 l'informant qu'il est autorisé à communiquer avec le deuxième utilisateur U4, via le serveur de communication S4.

Lors d'une étape E28 suivante, le premier utilisateur U3 accède à sa messagerie électronique à partir du deuxième module de communication MSG du terminal T3 ou à partir d'un autre terminal, compose un message électronique ME2 dont le contenu est destiné au deuxième utilisateur U4 et le transmet au serveur de communication S4, en réponse au message ME1 transmis lors de l'étape E26.

Le message ME2 comprend par exemple une pièce jointe volumineuse.

Le message électronique ME2 est reçu par le serveur de communication S4 lors d'une étape E30.

L'étape E30 est suivie d'une étape E31 lors de laquelle le serveur de communication S4 accède à la mémoire M2, retrouve l'identifiant AD2 de second mode de communication, enregistré en association avec l'identifiant AD1 de second mode de communication du premier utilisateur U3 et transmet un message électronique ME3 au deuxième utilisateur U4 en utilisant l'identifiant AD2 de second mode de communication lu dans la mémoire M2. L'expéditeur de ce message électronique ME3 est le serveur de communication S4. Le contenu de ce message est le contenu du message ME2 transmis par le premier utilisateur U3.

Ainsi, le premier utilisateur U3 peut transmettre un message au deuxième utilisateur U4 sans connaître l'adresse de messagerie du deuxième utilisateur U4. De plus, lors de cet envoi, l'adresse de messagerie du premier utilisateur U3 n'est pas communiquée au deuxième utilisateur U4.

Si, lors de l'étape E31, aucun identifiant de second mode de communication a été stocké en association avec l'identifiant AD1 de second mode de communication du premier utilisateur, le processus s'arrête et le message n'est pas transmis.

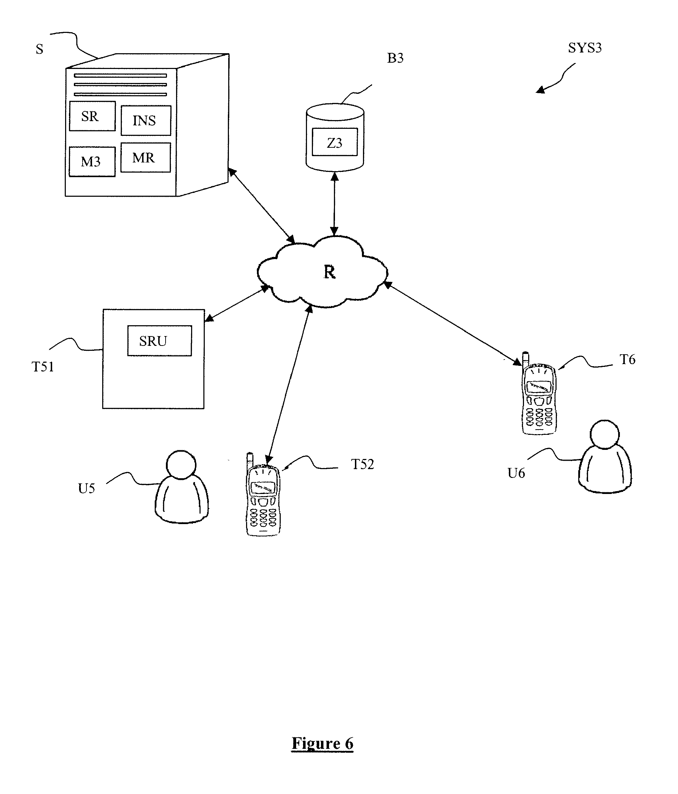

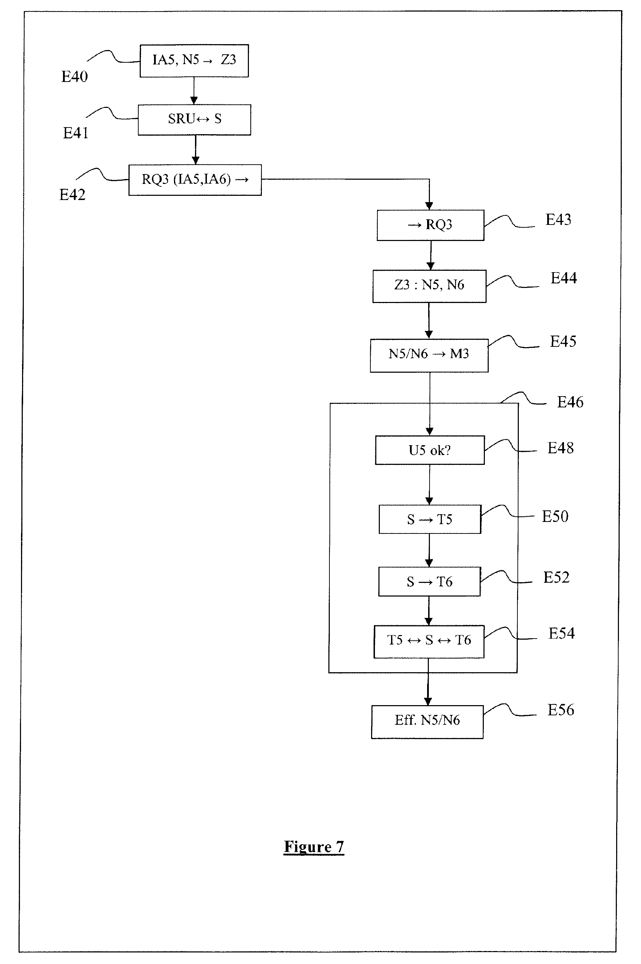

Un troisième mode de réalisation d'un procédé d'établissement d'une communication et d'un procédé de demande d'établissement d'une communication va maintenant être décrit en référence aux figures 6 et 7.

Dans ce mode de réalisation, la communication établie est une conversation téléphonique.

En référence à la figure 6, un système SYS3 comprend un serveur S.

Le système SYS3 comprend également une mémoire B3 accessible par le serveur S à travers un réseau R de communication.

A titre d'alternative, la mémoire B3 est une mémoire du serveur S.

Le serveur S héberge un module SR apte à offrir un service de type réseau social.

De façon connue, un réseau social permet à des membres d'une communauté, inscrits au service, de partager des informations.

Le serveur S comprend également un module INS d'inscription et un module MR de mise en relation.

Le système SYS3 comporte également un premier terminal T51 et un deuxième terminal T52 d'un premier utilisateur U5.

Le premier terminal T51 est par exemple un ordinateur de type PC (pour "Personal Computer").

Un module client SRU de réseau social, installé sur le premier terminal T51, permet à l'utilisateur U5 d'accéder au réseau social à travers le module SR installé sur le serveur S. L'utilisateur U5 peut ainsi consulter des informations mises en réseau par les autres utilisateurs. En particulier, le premier utilisateur U5 peut consulter des informations fournies par le deuxième utilisateur U6. La consultation de ces informations représente un premier mode de communication.

Le module SRU représente un premier module de communication.

Le deuxième terminal T52 du premier utilisateur U5 est, par exemple, un téléphone fixe, un téléphone mobile ou un PDA (pour "Personal Digital Assistant").

Le système SYS3 comporte également un terminal T6 appartenant à un deuxième utilisateur U6. Le terminal T6 du deuxième utilisateur U6 est par exemple un téléphone mobile.

De façon classique, les utilisateurs U5 et U6 sont enregistrés auprès du réseau social au moyen respectivement d'un premier identifiant d'application IA5 et d'un deuxième identifiant d'application IA6.

En référence à la figure 7, lors d'une étape préalable d'inscription E40, le premier utilisateur U5 communique au module INS du serveur S, le premier identifiant d'application IA5 et un numéro de téléphone, par exemple le numéro N5 du deuxième terminal T52 du premier utilisateur U5. Le module d'inscription INS enregistre le numéro du deuxième terminal T52 du premier utilisateur en association avec le premier identifiant d'application IA5 dans une table d'identifiants Z3 de la mémoire B3. Le numéro de téléphone N5 du deuxième terminal T52 du premier utilisateur U5 représente un identifiant d'un second mode de communication de l'utilisateur U5.

Lors d'une deuxième étape préalable d'inscription (non représentée sur la figure), l'utilisateur U6 communique au module d'inscription INS du serveur S le deuxième identifiant d'application IA6 et un numéro d'appel N6 du terminal T6 et le module d'inscription INS enregistre le numéro du terminal T6 du deuxième utilisateur U6 en association avec le deuxième identifiant d'application IA6. Le numéro de téléphone N6 du terminal T6 du deuxième utilisateur U6 représente un identifiant d'un second mode de communication de l'utilisateur U6.

Lors d'une étape E41, le premier utilisateur U5 se connecte au réseau social au moyen du module utilisateur SRU du réseau social.

Lors d'une étape E42, le module utilisateur SRU du réseau social transmet au module de mise en relation MR du serveur S, une requête RQ3 de mise en relation avec l'utilisateur U6 comportant le premier identifiant d'application IA5 de l'utilisateur U5 et le deuxième identifiant d'application IA6 de l'utilisateur U6.

A titre d'alternative, la requête RQ3 de mise en relation comporte une information permettant au module de mise en relation MR de retrouver le premier et le deuxième identifiants d'application.

L'étape E42 de transmission de requête est suivie d'une étape E43 lors de laquelle le module de mise en relation MR reçoit la requête de mise en relation RQ3.

Lors d'une étape suivante E44, le module de mise en relation MR du serveur S obtient par lecture dans la table d'identifiants Z3, d'une part l'identifiant N5 de second mode de communication associé au premier identifiant d'application IA5 du premier utilisateur U5 et d'autre part, l'identifiant N6 de second mode de communication associé au deuxième identifiant d'application IA6 du deuxième utilisateur U6.

L'étape E44 est suivie d'une étape E45 lors de laquelle le module de mise en relation MR enregistre, dans une mémoire temporaire M3 du serveur S, l'identifiant N6 de second mode de communication du deuxième utilisateur U6 en association avec l'identifiant N5 de second mode de communication du premier utilisateur U5.

Lors d'une étape E46 suivante, le module de mise en relation MR établit une communication entre l'utilisateur U5 et l'utilisateur U6 selon le deuxième mode de communication.

Plus précisément, lors d'une première sous étape E48, le module de mise en relation MR appelle le deuxième utilisateur U6, par exemple en utilisant l'identifiant de second mode de communication du deuxième utilisateur, pour savoir s'il est d'accord pour communiquer avec le premier utilisateur selon le deuxième mode de communication.

Si le deuxième utilisateur U6 refuse cette communication, le module MR efface de la mémoire l'association de deux identifiants de second mode et le processus s'arrête. Le module SR prévient ou non le premier utilisateur du refus du deuxième utilisateur U6.

La sous étape E48 permet d'apporter un niveau de sécurité supplémentaire en permettant au deuxième utilisateur de refuser une communication.

La sous étape E48 est suivie d'une sous étape E50 lors de laquelle le module MR initie une communication avec le deuxième terminal T52 du premier utilisateur U5, en utilisant le premier identifiant N5 de second mode de communication du premier utilisateur U5.

Puis, lors d'une deuxième sous étape E52, le module de mise en relation MR initie une communication avec le terminal T6 de l'utilisateur U6, en utilisant l'identifiant N6 de second mode de communication du deuxième utilisateur U6 enregistré dans la mémoire M3 en association avec l'identifiant N5.

Enfin dans une troisième sous étape E54, le module de mise en relation MR relaie d'une part les informations transmises par l'utilisateur U5 à l'utilisateur U6 et d'autre part les informations émises par l'utilisateur U6 vers l'utilisateur U5.

Ainsi, l'utilisateur U5 peut communiquer, selon un second mode de communication avec l'utilisateur U6. Avantageusement, le serveur S joue le rôle de transmetteur et permet ainsi aux deux utilisateurs de communiquer entre eux sans dévoiler à l'autre leur numéro de terminal.

A la fin de la conversation, lors d'une étape E56, le module de communication MR du serveur S efface de la mémoire temporaire M3, l'identifiant N5 de second mode de communication du premier utilisateur U5 et l'identifiant N6 de second mode de communication associé.

Selon un mode de réalisation choisi et représenté à la figure 8, un serveur mettant en oeuvre un procédé d'établissement d'une communication selon l'invention est par exemple un micro-ordinateur 200 qui comporte de façon connue, notamment une unité de traitement 202 équipée d'un microprocesseur, une mémoire morte de type ROM ou EEPROM 203, une mémoire vive de type RAM 204.

Le serveur 200 peut comporter de manière classique et non exhaustive les éléments suivants: un clavier, un écran, un moyen de stockage...

La mémoire morte 203 comporte des registres mémorisant un programme d'ordinateur PG comportant des instructions de programme adaptées à réaliser les étapes d'un procédé d'établissement d'une communication selon l'invention.

Lors de la mise sous tension, le programme PG stocké dans la mémoire morte 203 est transféré dans la mémoire vive qui contiendra alors un code exécutable ainsi que des registres pour mémoriser les variables nécessaires à la mise en oeuvre d'une étape de réception en provenance d'un premier module de communication, d'une requête de mise en relation comportant un premier et un deuxième identifiant d'application; d'une étape d'obtention d'au moins un identifiant d'un second mode de communication du premier utilisateur et d'au moins un identifiant du second mode de communication du deuxième utilisateur, en fonction du premier et du deuxième identifiants d'application; d'une étape d'enregistrement dans une mémoire de l'association entre les deux identifiants du second mode de communication; d'une étape d'établissement d'une communication entre le premier et le deuxième utilisateurs selon le deuxième mode de communication en fonction des identifiants associés enregistrés.

De manière plus générale un moyen de stockage, lisible par un ordinateur ou par un microprocesseur, intégré ou non au dispositif, éventuellement amovible, mémorise un programme mettant en oeuvre les étapes d'un procédé d'établissement d'une communication, selon l'invention.

## Revendications

1. Procédé d'établissement d'une communication entre un premier (U1) et un deuxième (U2) utilisateurs possédant respectivement un premier (IA1) et un deuxième (IA2) identifiants d'application, lesdits premiers et deuxième identifiants d'application étant partagés entre les utilisateurs, le premier utilisateur étant connecté à une application de communication dédiée au moyen d'un premier module de communication (MM1) et du premier identifiant d'application (IA1) et étant apte à communiquer selon un premier mode de communication avec le deuxième utilisateur (U2) au moyen du deuxième identifiant d'application (IA2), **caractérisé en ce qu'**il comporte :
- une étape de réception (E3) en provenance du premier module de communication, d'une requête de mise en relation, ladite requête comportant le premier et le deuxième identifiant d'application;
- une étape d'obtention (E4) d'au moins un identifiant (N1) d'un second mode de communication du premier utilisateur et d'au moins un identifiant (N2) du second mode de communication du deuxième utilisateur, en fonction du premier et du deuxième identifiants d'application;
- une étape d'enregistrement (E5) dans une mémoire (M1), de l'association entre les deux identifiants du second mode de communication;
- une étape d'établissement (E10) d'une communication entre le premier et le deuxième utilisateurs selon le deuxième mode de communication en fonction des identifiants associés enregistrés.

2. Procédé d'établissement selon la revendication 1 **caractérisé en ce qu'**il comporte en outre une étape de communication (E9) initiée par un deuxième module de communication du premier utilisateur via un identifiant de communication prédéterminé et **en ce que** l'étape d'établissement d'une communication comporte une étape d'appel d'un deuxième module de communication du deuxième utilisateur.

3. Procédé d'établissement selon la revendication 2 **caractérisé en ce que** l'identifiant de communication est transmis (E7) en réponse à la requête de mise en relation.

4. Procédé d'établissement selon la revendication 1 **caractérisé en ce que** l'étape d'établissement d'une communication comporte une première étape d'appel (E26) d'un deuxième module de communication du premier utilisateur et une deuxième étape d'appel (E31) d'un deuxième module de communication du deuxième utilisateur.

5. Procédé d'établissement selon la revendication 4 **caractérisé en ce que** les deuxièmes modules de communication sont des modules de messagerie électronique.

6. Procédé d'établissement selon la revendication 4 **caractérisé en ce que** les deuxièmes modules de communication sont des terminaux de téléphonie.

7. Procédé d'établissement selon la revendication 1 **caractérisé en ce que** la requête de mise en relation est une requête de type HTTP.

8. Procédé d'établissement selon la revendication 1 **caractérisé en ce qu'**il comporte en outre, après l'étape d'établissement de la communication, une étape d'effacement (E11) de la mémoire (M1), des identifiants associés enregistrés.

9. Procédé de demande d'établissement d'une communication d'un premier utilisateur (U1) avec un deuxième utilisateur (U2), possédant respectivement un premier (IA1) et un deuxième (IA2) identifiants d'application, lesdits premiers et deuxième identifiants d'application étant partagés entre les utilisateurs, le premier utilisateur étant connecté à une application de communication dédiée au moyen d'un premier module de communication et du premier identifiant d'application et étant apte à communiquer selon un premier mode de communication avec le deuxième utilisateur au moyen du deuxième identifiant d'application, **caractérisé en ce qu'**il comporte une étape d'envoi (E2), par le premier module de communication, d'une requête de mise en relation par l'intermédiaire d'un second mode de communication, ladite requête comportant le premier et le deuxième identifiant d'application.

10. Procédé de demande d'établissement selon la revendication 9 **caractérisé en ce qu'**il comporte en outre, suite à la réception d'une réponse à la requête de mise en relation, une étape d'envoi (E8) par le premier module de communication à un deuxième module de communication d'un identifiant de communication prédéterminé (NA1).

11. Serveur de communication (S2) entre un premier (U1) et un deuxième (U2) utilisateurs possédant respectivement un premier (IA1) et un deuxième (IA2) identifiants d'application, **caractérisé en ce qu'**il comporte :
- des moyens de réception, en provenance d'un premier module de communication du premier utilisateur, d'une requête de mise en relation, ladite requête comportant un premier identifiant d'application du premier utilisateur et un deuxième identifiant d'application du second utilisateur;
- des moyens d'obtention d'au moins un identifiant d'un second mode de communication du premier utilisateur et d'au moins un identifiant du second mode de communication du deuxième utilisateur, en fonction du premier et du deuxième identifiants d'application;
- des moyens d'enregistrement dans une mémoire, de l'association entre les deux identifiants du second mode de communication;
- des moyens d'établissement d'une communication entre le premier et le deuxième utilisateurs selon le deuxième mode de communication en fonction des identifiants associés enregistrés.

12. Terminal de communication comportant un premier module de communication apte à se connecter à une application de communication dédiée, au moyen d'un premier identifiant d'application et étant apte à communiquer selon un premier mode de communication avec un deuxième utilisateur au moyen d'un deuxième identifiant d'application, **caractérisé en ce qu'**il comporte des moyens d'envoi d'une requête de mise en relation par l'intermédiaire d'un second mode de communication, ladite requête comportant le premier et le deuxième identifiant d'application.

13. Produit programme d'ordinateur comprenant des instructions pour mettre en oeuvre les étapes d'un procédé d'établissement d'une communication entre un premier et un deuxième utilisateurs selon l'une des revendications 1 à 8 lorsqu'il est chargé et exécuté par un processeur.

14. Produit programme d'ordinateur comprenant des instructions pour mettre en oeuvre les étapes d'un procédé de demande d'établissement d'une communication entre un premier et un deuxième utilisateurs selon l'une des revendications 9 ou 10 lorsqu'il est chargé et exécuté par un processeur.
